# EUROPEAN PATENT APPLICATION

(11) **EP 4 604 008 A1**
(43) Date of publication of application: **20.08.2025**
(21) Application number: 25155575.1
(22) Date of filing: 03.02.2025
(51) Int. Cl.: G06F 40/30, G06F 40/56, G06N 3/0475

(54) **IMPLICIT PROMPT REWRITING**

(30) Priority: 14.02.2024 US 202418441714
(71) Applicant: Microsoft Technology Licensing, LLC, Redmond, WA 98052 (US)
(72) Inventor: MISHRA, Deepak, Redmond, 98052 (US); VASAL, Aditya, Redmond, 98052 (US); CHEN, Shanna X, Redmond, 98052 (US); STEIN, Alexander Isaac, Redmond, 98052 (US); SHARMA, Srinagesh, Redmond, 98052 (US); ALBINATI CORTEZ, Julio, Redmond, 98052 (US); TROY, Adam Douglas, Redmond, 98052 (US)
(74) Representative: CMS Cameron McKenna Nabarro Olswang LLP

(57) **Abstract**

Systems and methods for generating an optimized prompt using a language model are disclosed. A query is received at an application. A description is generated for the query based on information extracted from the query. The description is then used to identify a top-k most similar prompt from a prompt library. An optimized prompt is generated at the language model based on the description and the top-k most similar prompts. An optimized response is generated based on the optimized prompt. An evaluation prompt including the optimized response is generated. The evaluation prompt includes instructions to compare the optimized response to a non-optimized response based on the query. A rationale is generated indicating the results of the comparison. The results of the comparison may be interactive.

## Description

### BACKGROUND

In generative artificial intelligence (AI) applications, a generative AI model processes a set of input data often referred to as a "prompt." The formation and content of the prompt may have a significant effect on the output generated from the AI model. For instance, a poorly formed prompt will often result in worse responses than a properly formed prompt.

It is with respect to these limitations and other considerations that examples have been made. In addition, although relatively specific problems have been discussed, it should be understood that the examples should not be limited to solving the specific problems identified in the background.

### SUMMARY

Examples described in this disclosure relate to systems and methods for generating optimized prompt for a Natural Language Processing Model. For example, an application, such as a web browser, may be launched on a computing device. A query is received at the web browser or other application. An optimized prompt for that query is then generated using generative artificial intelligence (AI) model.

To generate the optimized prompt, information is extracted from the query such as a description, task, domain, and/or category of the query. The generated information, such as the description, for the query is compared to other equivalent information, such as a description, for example prompts within an optimized prompt library to identify a top-k most similar prompts within the optimized prompt library. The comparison to identify the top-k most similar prompts may be performed by a comparison of an embedding for the query with embeddings for the example prompts in the optimized prompt library.

A revision prompt is then generated that includes the query and the top-k most similar prompts. The revision prompt is provided as input into a generative AI model, which processes the revision prompt to generate an optimized prompt for the initial query. The optimized prompt is provided as input to the same or different language model. The language model processes the optimized prompt to generate an optimized response. The optimized response is then surfaced in the same or different application interface.

In some examples, the optimized response may be compared to an original or non-optimized response to determine if the optimized prompt actually produced an improved result. For instance, the same or different language model may process an evaluation prompt that includes the query, the optimized response, and a non-optimized response. The language model evaluates the responses according to instructions set forth in the evaluation prompt. As an output, in some examples, the language model generates a rationale to indicate the advantages and disadvantages of the optimized response and the non-optimized response.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### BRIEF DESCRIPTION OF THE DRAWINGS

The present disclosure is illustrated by way of example by the accompanying figures, in which like references indicate similar elements. Elements in the figures are illustrated for simplicity and clarity and have not necessarily been drawn to scale.
FIG. 1 is a block diagram of a system in which an optimized prompt generation system is implemented according to an example.
FIG. 2A is a block diagram of example components of a prompt rewriting system.
FIG. 2B is a block diagram of an example data flow for generating an optimized prompt for an input query.
FIG. 3 depicts an example method of generating an optimized prompt.
FIG. 4 is a block diagram illustrating example physical components of a computing device with which aspects of the disclosure may be practiced.

### DETAILED DESCRIPTION

Examples described in this disclosure relate to systems and methods for generating an optimized prompt, based on a query, using a generative AI model, such as a language model, a large language model (LLM), multimodal model, or other type of generative AI model. In an example implementation, a real-time optimized prompt is generated for an input query received from a user.

Despite advances in generation quality, state-of-the-art LLMs still struggle with stability and robustness when following instructions within the prompt, as subtle semantic variations in the prompt can drastically alter the output behavior. Some impact of this behavior is clearly felt in prompt portability, where a prompt that has been tuned for a specific model often does not directly translate to effective outcomes for other models. By performing such prompt improvements at runtime with the technology disclosed herein, the accuracy and general quality of the responses generated from the language models may be substantially improved. Further, the prompts can be improved for the specific models that are processing the prompts. This improvement in response quality represents an overall improvement to the computing processes as a whole. In addition, the improved quality of the resultant responses also minimizes the likelihood of the prompts having to be manually revised and rerun multiple times in an attempt by the user to acquire better responses from the computing system. As a result, the processing resources that would be required from such subsequent attempts can be conserved.

As an example of the technology disclosed herein, a query is received as input into a search field of a web browser. This input query is analyzed to extract additional information such as a description, task, domain, category and/or the like from the query. In some examples, an embedding generator generates an embedding for the additional information extracted for the query. The embedding of the description for the query may be used to identify a top-k most similar prompts within an optimized prompt library. For instance, the top-k most similar prompts may be identified based on a comparison of the embedding of the additional information for the query and existing embeddings within the optimized prompt library.

A revision prompt is then generated. In an example, the revision prompt comprises the query and the top-k most similar prompts (or portions thereof) from the optimized prompt library. The revision prompt is provided as input to a language model for generating an optimized prompt. In response to the revision prompt, the language model generates an optimized prompt based on the revision prompt, such as the query and the top-k similar prompts. The generated optimized prompt for the query is then provided as input to the language model. In response to the optimized prompt, the language model generates an optimized response. The optimized response is then surfaced.

In some instances, a non-optimized response may also be generated by processing the initial query (for example, non-optimized prompt) as received. The differences between the optimized response and the non-optimized response are then evaluated through the use of a language model, which may be the same or different language model from the one that generated the responses. To perform the evaluation, a judgment prompt is generated that includes the query, the optimized response, and the non-optimized response. The judgment prompt includes instructions for comparing the optimized response to the non-optimized response based on the same query. In response to receiving the judgment prompt as input, in some examples, the language model generates a rationale depicting the advantages and disadvantages of the optimized and non-optimized response. The language model surfaces the rationale concurrently with the optimized response and the non-optimized response.

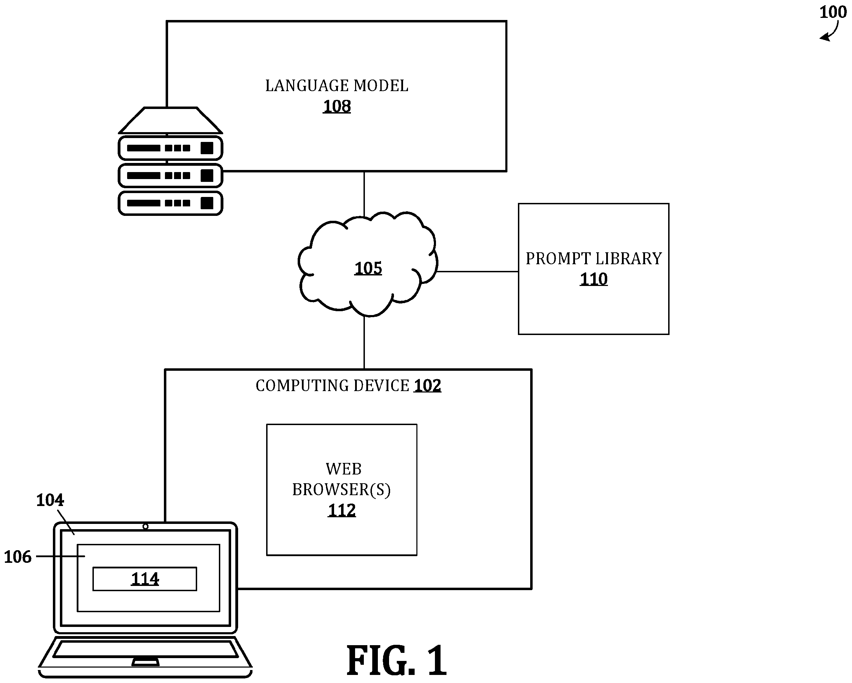

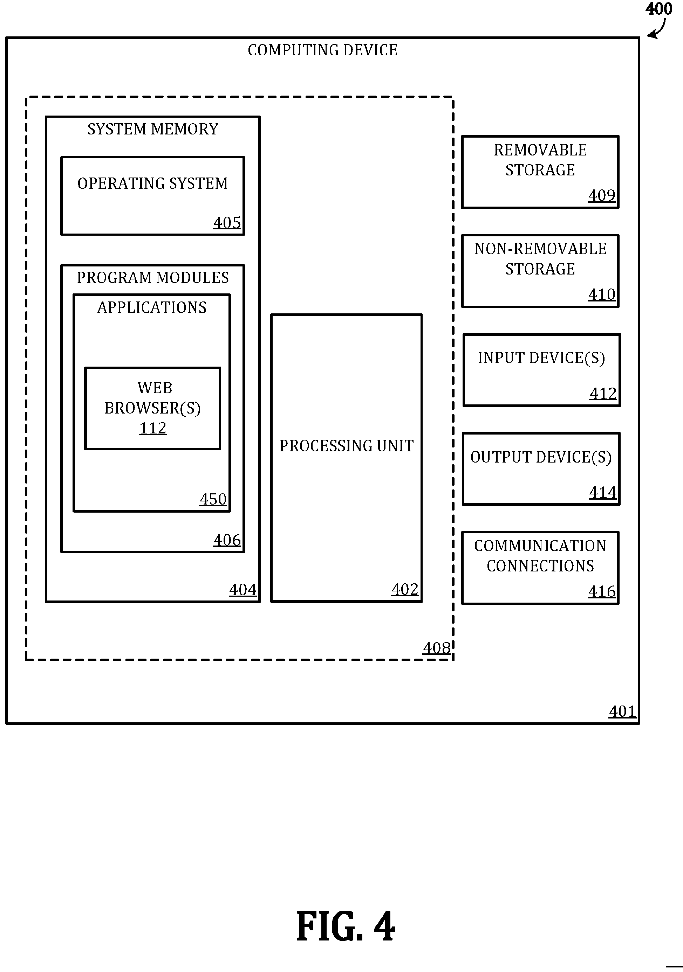

FIG. 1 is a block diagram of an example system 100 for generating autocomplete text in accordance with an example. The example system 100, as depicted, is a combination of interdependent components that interact to form an integrated whole. Some components of the system 100 are illustrative of software applications, systems, or modules that operate on a computing device or across a plurality of computer devices. Any suitable computer device(s) may be used, including web servers, application servers, network appliances, dedicated computer hardware devices, virtual server devices, personal computers, a system-on-a-chip (SOC), or any combination of these and/or other computing devices known in the art. In one example, components of systems disclosed herein are implemented on a single processing device. The processing device may provide an operating environment for software components to execute and utilize resources or facilities of such a system. An example of processing device(s) comprising such an operating environment is depicted in FIG. 4. In another example, the components of systems disclosed herein are distributed across multiple processing devices. For instance, an input may be entered on a user device or client device and information may be processed on or accessed from other devices in a network, such as one or more remote cloud devices or web server devices.

The example system 100 generates an optimized prompt using a generative AI model such as a language model 108, which may be an LLM, a multimodal model, or other types of generative AI models. Example models may include the GPT models from OpenAI, BARD from Google, and/or LLaMA from Meta, among other types of generative AI models. The system 100 includes a computing device 102 that may take a variety of forms, including, for example, desktop computers, laptops, tablets, smart phones, wearable devices, gaming devices/platforms, virtualized reality devices/platforms (e.g., virtual reality (VR), augmented reality (AR), mixed reality (MR)), etc. The computing device 102 has an operating system that provides a graphical user interface (GUI) that allows users to interact with the computing device 102 via graphical elements, such as application windows (e.g., display areas), buttons, icons, and the like. For example, the graphical elements are displayed on a display screen 104 of the computing device 102 and can be selected and manipulated via user inputs received via a variety of input device types (e.g., keyboard, mouse, stylus, touch, spoken commands, gesture).

In examples, the computing device 102 includes a plurality of applications for performing different tasks, such as communicating, information generation and/or management, data manipulation, visual construction, resource coordination, calculations, etc. According to an example implementation, the applications include at least one web browser 112. A web browser 112 is an application on a computing device 102 that allow users to access information over a network 105 by using keywords or phrases at an input field 114 of the web browser 112. The input field 114 may be associated with a chat interface or query interface for interacting with a generative AI model. The keywords or phrases entered at the input field 114 are generally referred to herein as an input query. Queries can have different types, lengths, and intents base on the information that the user wants to access or retrieve.

Example of web browser 112 include, but are not limited to, BING, FIREFOX, GOOGLE CHROME, SAFARI, and the like. The web browser 112 has one or more application UIs 106 by which a user can view and interact with features provided by the web browser 112. For example, an application UI 106 may be presented on the display screen 104. The web browser 112 has an input field 114 that supports multimodal input. For example, the input field 114 may receive data in combination of modalities (e.g., text, images, audio). In some examples, UIs 106 supports a chat feature that allows a user to interact with the web browser 112 using a chatbot, such as BING CHAT, through an agent interface. The chatbot may interact with a user through various communication means such as text or voice. The chatbot may use different technologies for generating natural language, such as generative AI models, natural language processing (NLP), machine learning (ML), and/or deep learning (DL).

According to examples, the system 100 further includes a prompt library 110 that includes embeddings for optimized prompts, as discussed further herein. According to an example, the prompt library 110, one or more components thereof, is hosted on a separate device that is accessible over the network 105 via an application programming interface (API). As will be described in further detail below, the library 110 provides functionality for identifying a top-k most similar prompt that may be incorporated into an input prompt for the language model 108.

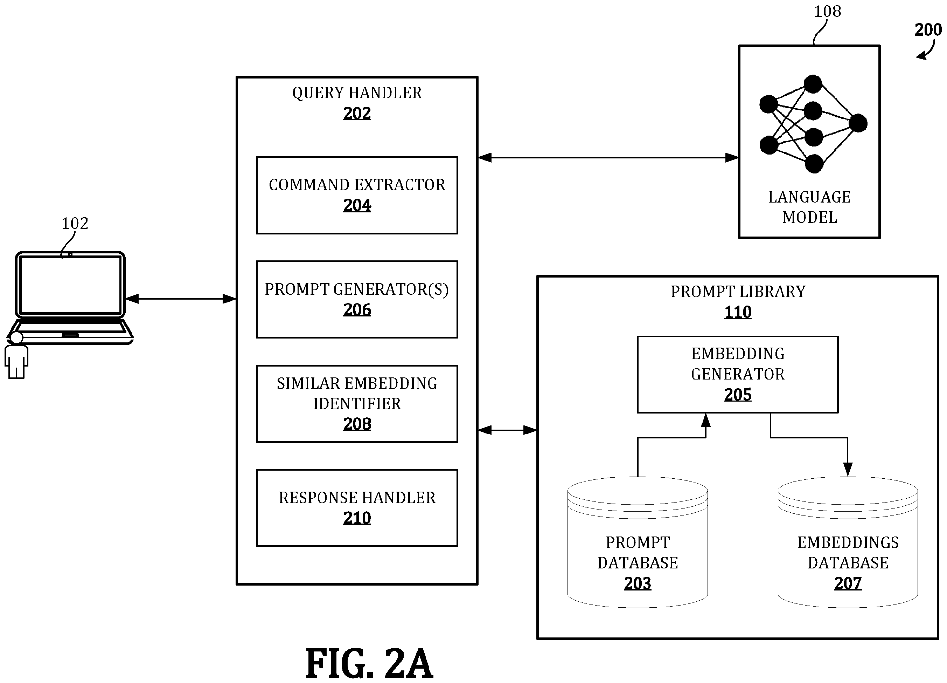

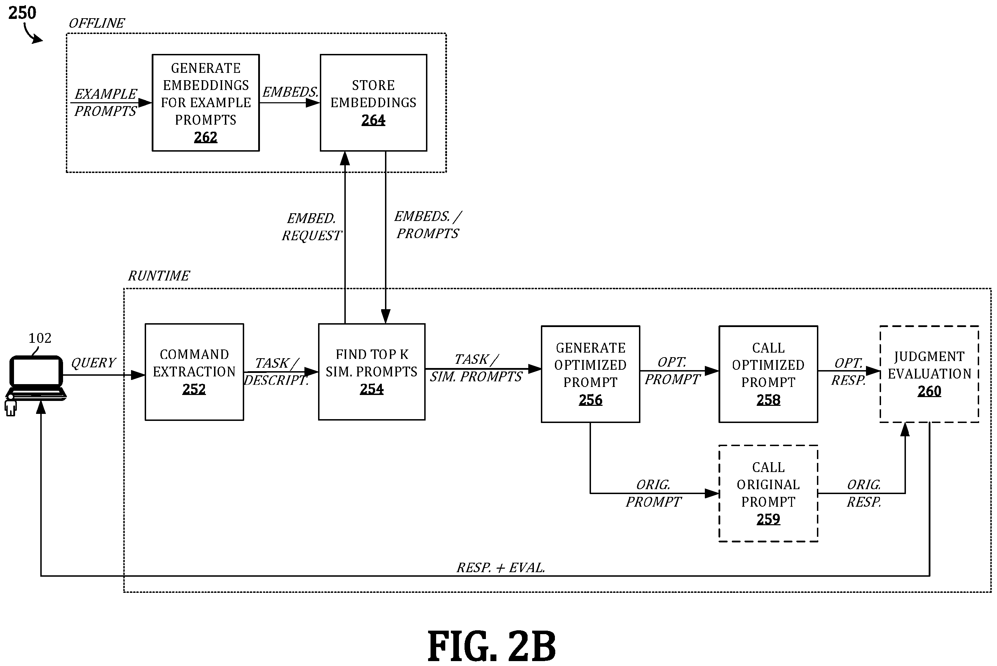

In an example, an optimized prompt is generated for the query received in the input field 114 and the top-k most similar prompt identified from the prompt library 110. The optimized prompt is then provided as input to the language model 108. The language model 108 generates an output, in response to the optimized prompt, that includes the optimized response. These and other examples are described below in further detail with reference to FIGS. 2-4.

According to example implementations, the language model 108 is trained to understand and generate sequences of tokens, which may be in the form of natural language (e.g., human-like text). In various examples, the language model 108 can understand complex intent, cause and effect, perform language translation, semantic search classification, complex classification, text sentiment, summarization, summarization for an audience, and/or other natural language capabilities.

In some examples, the language model 108 is in the form of a deep neural network that utilizes a transformer architecture to process the text it receives as an input or query. The neural network may include an input layer, multiple hidden layers, and an output layer. The hidden layers typically include attention mechanisms that allow the language model 108 to focus on specific parts of an input, and to generate context-aware outputs. Language model 108 is generally trained using supervised learning based on large amounts of annotated text data and learns to predict the next word or the label of a given text sequence.

The size of a language model 108 may be measured by the number of parameters it has. For instance, as one example of an LLM, the GPT-4 model from OpenAI has billions of parameters. These parameters may be weights in the neural network that define its behavior, and a large number of parameters allows the model to capture complex patterns in the training data. The training process typically involves updating these weights using gradient descent algorithms, and is computationally intensive, requiring large amounts of computational resources and a considerable amount of time. The language model 108 in examples herein, however, is pre-trained, meaning that the language model 108 has already been trained on the large amount of data. This pre-training allows the model to have a strong understanding of the structure and meaning of an input, which makes it more effective for the specific tasks discussed herein.

The language model 108 may operate as a transformer-type neural network. Such an architecture may employ an encoder-decoder structure and self-attenuation mechanisms to process the input (e.g., the text, image description or contextual history). Initial processing of the input data may include tokenizing the input into tokens that may then be mapped to a unique integer or mathematical representation. The integers or mathematical representations combined into vectors that may have a fixed size. These vectors may also be known as embeddings.

The initial layer of the transformer model receives the token embeddings. Each of the subsequent layers in the model may uses a self-attention mechanism that allows the model to weigh the importance of each token in relation to every other token in the input. In other words, the self-attention mechanism may compute a score for each token pair, which signifies how much attention should be given to other tokens when encoding a particular token. These scores are then used to create a weighted combination of the input embeddings.

In some examples, each layer of the transformer model comprises two primary sub-layers: the self-attention sub-layer and a feed-forward neural network sub-layer. The self-attention mechanism mentioned above is applied first, followed by the feed-forward neural network. The feed-forward neural network may be the same for each position and apply a simple neural network to each of the attention output vectors. The output of one layer becomes the input to the next. This means that each layer incrementally builds upon the understanding and processing of the data made by the previous layers. The output of the final layer may be processed and passed through a linear layer and a softmax activation function. This outputs a probability distribution over all possible tokens in the model's vocabulary. The token(s) with the highest probability is selected as the output token(s) for the corresponding input token(s).

In example implementations, the language model 108 and prompt library 110 operate on a device located remotely from the computing device 102. For instance, the computing device 102 may communicate with the language model 108 and prompt library 110 using one or a combination of networks 105 (e.g., a private area network (PAN), a local area network (LAN), a wide area network (WAN)). In some examples, the language model 108 is implemented in a cloud-based environment or server-based environment using one or more cloud resources, such as server devices (e.g., web servers, file servers, application servers, database servers), personal computers (PCs), virtual devices, and mobile devices. The hardware of the cloud resources may be distributed across disparate regions in different geographic locations.

FIG. 2A is a block diagram of example components for an optimized prompt generation system 200. The system 200 includes some of the same components of FIG. 1, such as the computing device 102, the language model 108, and the prompt library 110. The system also includes a query handler 202. The query handler 202 processes the queries and responses discussed herein. In some examples, the query handler 202 operates on the computing device 102. In other examples, the query handler 202, or components thereof, operate on a device remote from the computing device 102, such as a remote server, cloud-based server, or other device. For instance, the query handler 202 may operate on the same device that is hosting the chat application or other application that receives the input query for interacting with the language model 108.

In the example depicted, the query handler includes a command extractor 204, at least one prompt generator 206, a similar-embedding identifier 208, and a response handler 210. The command extractor 204 extracts additional data or information from the input query. For instance, the command extractor 204 may separate out the task-based information of the user query (e.g., the command of the query) from the source data or other extra user input in the input query. Such additional data may include the task associated with the input query and/or the domain associated with the input query. A category for input query may also be generated or extraction. The extraction of additional information from the input query may also include generating a description of the input query that is representative of the user's instructions in the input query.

In some examples, extraction of the additional information by the command extractor 204 may include making a call to the language model 108 to extract the information. For instance, an extraction prompt may be generated that includes (1) static text in the form of instructions for the additional information to be extracted and (2) dynamic data that is populated with the input query. For example, the static instructions may include high-level instructions that direct the language model 108 to perform particular reasoning over the input query, such as "read the text from the input query to understand the user's request." The instructions may further include the particular fields for which the language model 108 is to generate data. The fields may include a description field, an input field, a domain field, and/or a category field, among others. The description filed is a description representative of the input query. The input field may be a data object (e.g., JSON object) that includes all the input parameters and respective values received with the input query, such as the source data. The domain input field is the problem domain the input query belongs. Example domains may be news, politics, sports, science, etc. The category field be the particular task for which the input query is requesting, such as summarization, topic extraction, question/answer, etc. Examples of sample input queries and outputs may also be included in the extraction prompt. The language model 108 then processes the extraction prompt and returns the additional information (e.g., the data fields) for the input query.

The prompt generator 206 generates the prompts discussed herein, such as the extraction prompt discussed above. The prompt generator 206 may generate the specific prompts in some examples by retrieving a particular prompt template and populating the prompt template with the correct dynamic data, such as the input query discussed above. The generation of the particular prompts are discussed in further detail below.

The similar-embedding identifier 208 identifies similar example prompts based on a comparison of embeddings. For instance, example optimum prompts stored in the prompt library 110 may be identified and used to generate an optimized prompt at runtime as discussed herein. To identify such example prompts, embedding comparison functions may be implemented.

As an example, the prompt library 110 may include an example-prompt database 203 that stores previously generated example optimum prompts, which may be referred to herein as example prompts. At an offline process, embeddings may be generated for the example prompts. The embeddings may be generated for similar data fields that are extracted from the run time input query, such as a description field, an input field, a domain field, and/or a category field associated with each example prompt. Such embeddings are generated by the embedding generator 205. The generated embeddings are then stored as associated with their corresponding example prompts. Such embeddings may be stored in an embeddings database 207 that is associated with the example-prompt database 203. In some examples, the example-prompt database 203 and the embeddings database 207 are a combined database, and the embeddings may be stored more directly with each example prompt, such as in metadata of the example prompt.

When an input query is received, an embedding may be generated for the additional information, for the query, extracted by the command extractor. That generated embedding for the input query may then compared to the embeddings for the example prompts to identify the example prompts that are closest to the input query. The comparison may be performed as a cosine similarity function and/or other algorithms or functions for comparing multi-dimensional vectors in multidimensional space. The top-k number of the closest (e.g., most similar) example prompts are then returned from the prompt library 110 to the query handler 202.

The prompt generator 206 generates a revision prompt that instructs the language model 108 to generate an optimized prompt for the input query. The revision prompt includes the input query as well as the top-k most-similar prompts (or portions thereof) acquired from the prompt library 110. The revision prompt is then provided as input to the language model 108, which processes the revision prompt to create an optimized prompt for the input query.

Once generated, the optimized prompt for the input query is provided as input to the language model 108, which processes the optimized prompt to generate an optimized response. The optimized response is then surfaced back to the user via the computing device 102. For instance, the optimized response may be sent to the computing device 102 to cause the optimized response to be displayed in the user interface of the respective application for which the input query was received.

The response handler 210 handles the responses that are received from the language model 108. For instance, when the language model 108 processes the various prompts discussed herein, the language model 108 generates an output payload with information or data that is responsive to the prompt provided as input in the language model 108. The response handler 210 processes these output payloads to extract the data from the output payload and pass the data to other components of the system, such as to be incorporated into subsequent prompts and/or surfaced to the user via the computing device 102.

FIG. 2B is a block diagram of an example data flow 250 for generating an optimized prompt for an input query. The data flow 250 includes a series of operations that are performed by the various components of the systems described herein. In the example depicted, a portion of the operations are performed at runtime when an input query is received, and a portion of the operations are performed as offline operations that may be performed asynchronously or without relationship to the timing of the receipt of the input query. More specifically, operations 252-260 are performed at runtime, such as by the query handler 202, and operation 262-264 are performed offline, such as by components of the prompt library 110.

For the runtime operations, the process is initialized when an input query is received from a user at the computing device 102, such as at an input field of a web application provided by a web browser. Once the query has been received, the query is received a command extraction operation 252 is performed, where an extraction of additional information from the input query is performed.

As discussed above, the additional information extracted for the input query may include task, domain, description, and/or category, among other types of information. The command extraction operation 252 may also include forming an extraction prompt that is processed by a language model to generate the additional information.

In examples, based on the extracted important information, or as part of the extracted information, a description may then be generated for the input query. The description may be a representation of the entire user ask of the query. An embedding generator may generate an embedding for the description of the query and/or other parts of the additional information extracted for the input query. The embedding for the input query, however, may not be generated for the additional input data, or source data, for which the initial query may be requesting analysis. For example, an input query may be requesting the summarization of a news article. The news article is considered to be the source data, and the summarization request is the request data, or user ask, portion of the input query. The embeddings that are generated and used for comparison herein may not include the source data (e.g., news article).

As a general overview, an embedding is a mathematical vector, commonly in a high dimensional space, that is representative of the words in text data. In some examples, the embedding may represent a semantic meaning of the text. The embeddings are useful because they provide a representation of the text that can be used for computer-based calculations and mathematical comparisons that are otherwise not possible with just the textual representation (e.g., the natural language input query). In the case of word, sentence, or other types of text embeddings, similar words or sentences will also have similar embeddings. As such, similar text may be identified by finding similar embeddings. The generation of the embeddings may be performed by the language models and/or other generative AI models (or portions thereof) discussed herein. In general, the embeddings may be generated from a pre-trained AI or ML model that receives the respective text and input and generates the embedding as output.

As an illustrative example of operation 252, an input query is received at a web browser from a user. The query is for summarizing an entire news article. The command extraction operation extracts a task of summarization from the input query. The domain of news is also extracted from the input query. The domain and/or other extracted information may be based on the request data of the input query and/or the source data. In this example, the news domain is extracted primarily based on the source data being a news article.

As another illustrative example, an input query may be received that is "write a newsletter update to our supporters about reaching these goals: {{ source data}}." In this examples, the source data is a list of goals for tiny home village, such as the number of residents, number of homes, and costs associated with building the village. The command extraction operation 252 extracts the following additional data from the input query:

```
            Description: "This prompt is to write a newsletter update to out supporters about
            reaching the foals of building tiny home villages for unhoused people."
             Task: "Write a newsletter update to our supporters about reaching the goals of
             { { source data}
             Input: "{ { Source data}}"
            Domain: "Social"
             Category: "Writing"
            Metric: "Creativity and Clarity"
```

This additional data may be generated by a language model that processes an extraction prompt that includes the input query (including the source data). In this example, an additional information field of an evaluation metric is also included. This additional field defines or identifies one or more useful metrics that may be used to evaluate the quality of the ultimate responses that are provided to the input query.

In this example, an embedding is generated for the "Description" field. For instance, an embedding is generated for the text "This prompt is to write a newsletter update to out supporters about reaching the foals of building tiny home villages for unhoused people."

Once the embedding of the additional information for the input query is generated, a find-similar-prompts operation 254 may be performed. The prompt-finding operation 254 is performed to find similar prompts, stored in the prompt library, to the input query. The identification of the similar prompts at operation 254 may be performed by comparing the embedding generated for the input query and embeddings for the example prompts stored in the prompt library.

Turning briefly to the offline operations 262-264, the prompt library may be populated offline, or at times other than the runtime when an input query is received. Populating the prompt library may include receiving or generating example optimum prompts for different tasks or operations. These example prompts may be generated through manual prompt engineering or rewriting by a development team. In other examples, the example prompts may be generated algorithmically through iterative evaluation by the language models themselves. When the example prompts are received for storage in the prompt library, additional data (that is similar to the additional data for the input query discussed above) may be extracted. For instance, task, domain, category, and/or description data may be generated for each of the example prompts. Embeddings for that additional data are then be generated for each of the example prompts at operation 262. The generated embeddings for the example prompts may be stored as corresponding to the respective example prompt at operation 264. Accordingly, each example prompt may have a corresponding embedding, and an identification of an embedding allows for the identification and retrieval of the corresponding example prompt.

Returning to the runtime operations, at the prompt-finding operation 254, the embedding generated for the input query is compared to the embeddings generated for the example prompts in the prompt library. The comparison may include generating a similarity score for each of the comparisons made. Based on the similarity scores, a top-k number of similar embeddings, and their corresponding example prompts, may be identified. In some examples, the number of example prompts (e.g., k) may be between 2-5, 2-10, or a greater number of example prompts. The comparisons may be made based on cosine similarity analyses of the embeddings or other types of embedding comparison functions (e.g., Approximate Nearest Neighbor (ANN) lookup, Jaccard index, Euclidean distance, dot product). The identified top-k number of prompts are then received for use in generating the optimized prompt for the input query.

The comparison operations to identify the similar prompts may also be further based on the additional information extracted from the input query. For instance, the example prompts may be first filtered based on common domains with the query prior to performing the embedding comparison. As an example, if the input query has a domain of "news," the example prompts used for comparison may be preferred in the embedding match. In other examples, the example prompts may be filtered to be limited to those example prompts that also have a domain of news.

The identified similar example prompts and the input query and/or the additional data extracted for the query are to an optimized-prompt generation operation 256. At operation 256, a revision prompt is generated that includes the identified similar example prompts the input query and/or the additional information extracted from the input query. The revision prompt includes static segments and dynamic segments. The static segments include static instructions for the language model to generate the optimized prompt. The static instructions may include instructions such as "This task requires you to rewrite the instructions for a parsing task in different ways. The new instructions should keep the same meaning and format as the original one, but vary in different word choice." The instructions may further include restrictions on the language model, such as restrictions on generating new properties and particular features that should be included depending on the type of language model that is to be used to ultimately process the optimized prompt.

The dynamic segments of the revision prompt may include: (1) the input query; (2) the top-k similar prompts; and (3) the type of model that is to be used to process the generated optimized query. The revision prompt is then provided to a language model, which processes the revision prompt to generate an optimized prompt for the input query.

Continuing with the above example of generating newsletter, the original input query included the request instructions, or command, of "write a newsletter update to our supporters about reaching these goals: {{ source data}}." The optimized prompt includes request instructions of "Create a newsletter update for our supporters that highlights how we achieved the { { source data}}."

The following table sets forth some additional examples of input queries and optimized prompts for the input queries.

| **Input Query** | **Optimized Prompt** |
|---|---|
| write a title of the text that is given to you | Given a text, write a brief and accurate title that captures the main idea of the text. The title should be one sentence only and use appropriate capitalization and punctuation. |
| { {inputText} } | |
| | {{inputText}} |
| write a newsletter from the below text. | Create a newsletter from the text that you are given. The newsletter should be engaging and informative and highlight the key points of the text. You can use headings, bullet points, and images to make the newsletter more attractive. |
| {{input}} | |
| | {{input}} |
| find subject for the email. | Given a text of a conversation, write a short phrase that describes what the conversation is about. The phrase should be no more than five words long and should capture the main point of the text. |
| { {conversation} } | |
| | { {conversation} } |
| Summarize the following passage. | - Condense the main points of the passage into a brief paragraph. |
| { {inputPassage} } | |
| | - Use markdown syntax to format your summary. |
| | - Emphasize any key words or phrases. |
| | {{inputPassage}} |

At operation 258, the optimized prompt is called. Calling the optimized prompt may include providing the optimized prompt to a language model (e.g., having the language model type identified in the optimized prompt). The language model process the optimized response to generate an optimized response. The language model that processes the optimized prompt may be the same or different language model than the one that generated the optimized prompt.

In some examples, the original input query (e.g., original prompt) may also be provided as input to the language model to have the language model generate an original response or non-optimized response at operation 259. In such examples, the optimized response generated from operation 258 and the non-optimized response generated from operation 259 may be provided into a judgement evaluation operation 260.

The evaluation operation 260 evaluates the two responses based on a set of criteria. The evaluation may be performed by creating a judgment or evaluation prompt that includes the non-optimized response, the optimized response, and the input query. In some examples, the evaluation prompt also includes the optimized prompt and the original prompt. Other dynamically populated portions of the evaluation prompt may include metrics or characteristics over which the responses should be evaluated. These metrics may be metrics that were generated as part of the optimized prompt generation, as discussed above. In other examples, different metrics may be selected or used based on the task and/or domain for the input query. Additionally or alternatively, the metrics used for evaluation may be a property or otherwise part of the similar example prompts that were identified in operation 254.

The static instructions of the evaluation prompt may include instructions to evaluate the two responses. The static instructions may include directions to compare the two response and identify their strengths and weaknesses with respect to given metrics or characteristics in relation to the input query. The static instructions may further request that the language model generate a rationale that summarizes the analysis and justifies the choice of one response over the other.

The evaluation prompt is then provided to a language model that processes the evaluation prompt to identify the better (e.g., more relevant) response between the optimized response and the non-optimized response. The language model provides a response that includes the better response, according to the metrics provided, along with a rationale for why the selected response is the better response.

A response to the initial input query may then be surfaced to user based on the output from the evaluation model. In some examples, only the better response, according to the evaluation output, is surfaced. For instance, if the evaluation output indicates that the optimized response is the better response, only the optimized response may be surfaced to the user. In other examples, both the responses may be surfaced to the user along with the indication of which response the evaluation output indicated was the better response along with the rationale. In such examples, the user is able to select either response and/or provide further feedback to the system. The feedback may then be used to adjust or modify the example optimum prompts in the prompt library. In some examples, if negative feedback is received on multiple occasions for an optimized response, the underlying example optimum prompts that were used to generate the optimized prompt and response may be removed from the prompt library. In some examples, if the optimized response is selected as the better response and/or the optimized response receives positive feedback, the corresponding optimized prompt may be stored in the prompt library as an example optimum prompt.

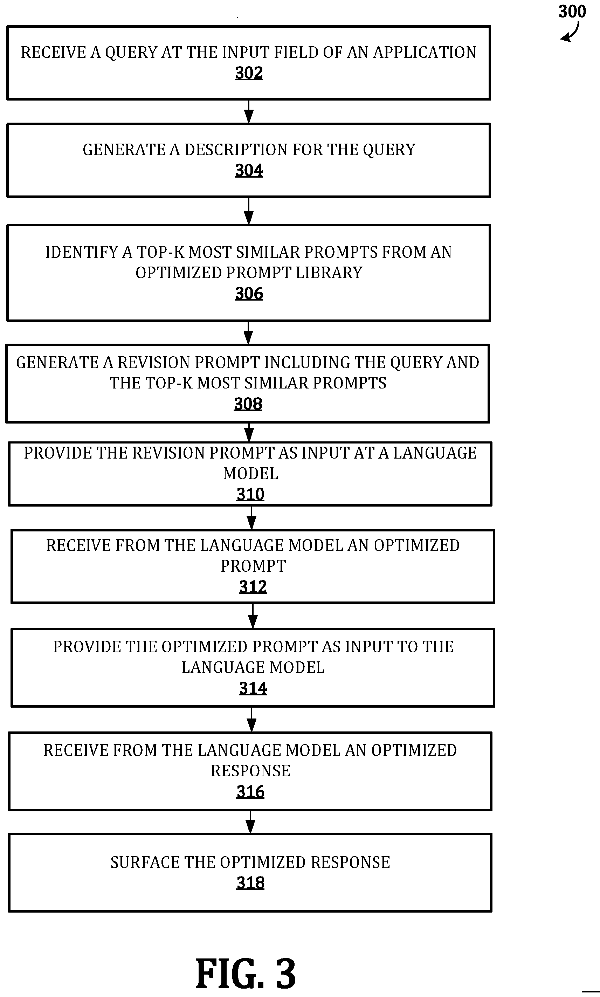

FIG. 3 depicts an example method 300 of generating an optimized prompt using a language model. The operations of method 300 may be performed by one or more of the systems, or components thereof, discussed herein. For instance, method 300 may be performed by a web-based service (e.g., search or chat service) operated on a remote server. In other examples, the method 300 may be performed by an application of a local device, such as a web browser operating on a personal computing device.

At operation 302, a query is received at an application. The application may be a search engine or other type of information retrieval application. The search engine may have a chat user-interface, such as a chatbot interface, for interacting with a language model. The application may similarly be a web browser having a chat interface. The application may also or alternatively be part of another application that relies on language model processing of inputs.

At operation 304, a description and/or other additional information is generated for the query. The description and/or other additional information for the query may be generated by the methods and processes discussed herein. The additional information may include data such as task, domain, and/or category for the input query. The additional information may also include one or more evaluation metrics for evaluating a response to the query. An embedding may be generated for the description as a mathematical representation in vector space.

At operation 306, the top-k most similar prompts are identified from an optimized prompt library. The top-k similar prompts may be identified as discussed herein. For instance, the embedding generated for the input query (and/or the description thereof) may be compared to the embeddings for the example prompts in the prompt library to identify the most similar embeddings. The example prompts corresponding to the top-k number of embeddings are then identified as the top-k most similar prompts.

At operation 308, a revision prompt including the query and the top-k most similar prompts is generated. The revision prompt requests a language model to generate an optimized prompt based on the similar prompts and the input query (and/or additional data extracted from the input query). The revision prompt may include the types of static instructions and other features as set forth above.

At operation 310, the revision prompt is provided as input at a language model. The revision prompt is then processed by the language model to generate the optimized prompt. At operation 312, the optimized prompt is then received as output from the language model in response to the revision prompt.

At operation 314, the optimized prompt is provided as input to the language model. The language model may be the same or different language model that generated the optimized prompt. The language model processes the optimized prompt to generate an optimized response. At operation 316, the optimized response is received from the language model in response to the optimized prompt.

At operation 318, the optimized response is surfaced. Surfacing the optimized response may include causing the display of the optimized response in the same interface through which the input query was received in operation 302.

FIG. 4 is a block diagram illustrating physical components (e.g., hardware) of a computing device 400 with which examples of the present disclosure may be practiced. The computing device components described below may be suitable for one or more of the components of the systems described above. In a basic configuration, the computing device 401 includes at least one processing unit 402 and a system memory 404. Depending on the configuration and type of computing device 400, the system memory 404 may comprise volatile storage (e.g., random access memory), non-volatile storage (e.g., read-only memory), flash memory, or any combination of such memories. The system memory 404 may include an operating system 405 and one or more program modules 406 suitable for running software applications 450 (e.g., webs browsers 112 or other language-model-based applications) and other applications.

The operating system 405 may be suitable for controlling the operation of the computing device 400. Furthermore, aspects of the disclosure may be practiced in conjunction with a graphics library, other operating systems, or any other application program and is not limited to any particular application or system. This basic configuration is illustrated in FIG. 4 by those components within a dashed line 408. The computing device 400 may have additional features or functionality. For example, the computing device 400 may also include additional data storage devices (removable and/or non-removable) such as, for example, magnetic disks, optical disks, or tape. Such additional storage is illustrated in FIG. 4 by a removable storage device 409 and a non-removable storage device 410.

As stated above, a number of program modules and data files may be stored in the system memory 404. While executing on the processing unit 402, the program modules 406 may perform processes including one or more of the stages of the methods and processes discussed herein, such as method 300 depicted in FIG. 3. Other program modules that may be used in accordance with examples of the present disclosure and may include applications such as electronic mail and contacts applications, word processing applications, spreadsheet applications, database applications, slide presentation applications, drawing or computer-aided application programs, etc.

Furthermore, examples of the disclosure may be practiced in an electrical circuit comprising discrete electronic elements, packaged or integrated electronic chips containing logic gates, a circuit utilizing a microprocessor, or on a single chip containing electronic elements or microprocessors. For example, examples of the disclosure may be practiced via a system-on-a-chip (SOC) where each or many of the components illustrated in FIG. 4 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to detecting an unstable resource may be operated via application-specific logic integrated with other components of the computing device 400 on the single integrated circuit (chip). Examples of the present disclosure may also be practiced using other technologies capable of performing logical operations such as, for example, AND, OR, and NOT, including mechanical, optical, fluidic, and quantum technologies.

The computing device 400 may also have one or more input device(s) 412 such as a keyboard, a mouse, a pen, a sound input device, a touch input device, a camera, etc. The output device(s) 414 such as a display, speakers, a printer, etc. may also be included. The aforementioned devices are examples and others may be used. The computing device 400 may include one or more communication connections 416 allowing communications with other computing devices. Examples of suitable communication connections 416 include RF transmitter, receiver, and/or transceiver circuitry; universal serial bus (USB), parallel, and/or serial ports.

The term computer readable media as used herein includes volatile and nonvolatile, removable and non-removable media implemented in any method or technology for storage of information, such as computer readable instructions, data structures, or program modules. The system memory 404, the removable storage device 409, and the non-removable storage device 410 are all computer readable media examples (e.g., memory storage.) Computer readable media include random access memory (RAM), read-only memory (ROM), electrically erasable programmable ROM (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 400. Any such computer readable media may be part of the computing device 400. Computer readable media does not include a carrier wave or other propagated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, communication media may include wired media such as a wired network or direct-wired connection, and wireless media such as acoustic, RF, infrared, and other wireless media.

In an aspect, the technology relates to a system for rewriting a prompt for a language model. The system includes at least one processor; and memory storing instructions that, when executed by the at least one processor, cause the system to perform operations. The operations include receive a query at an application; generate a description for the query based on information extracted from the query; identify example prompts, from a prompt library, that are similar to the query, wherein the similar example prompts are based on the description for the query; generate a revision prompt including the query and the identified similar example prompts, wherein the revision prompt includes static instructions directing the language model to revise the query based on the example prompts to form an optimized prompt; provide the revision prompt as input to the language model; receive, from the language model in response to the revision prompt, the optimized prompt; provide the optimized prompt as input to the language model; receive, from the language model in response to the optimized prompt, an optimized response; and surface the optimized response.

In an example, generating the description comprises generating an extraction prompt including the query and providing the extraction prompt as input to the language model. In another example, the operations further include extracting at least one of a domain or a task for the query. In a further example, identifying the similar example prompts is based on at least one of the description, domain, or task of the query. In another example, the operations further include generate an embedding for the description of the query. In a still further example, identifying the similar prompts further comprises comparing the generated embedding to embeddings for the example prompts in the prompt library. In still yet another example, the number of similar prompts is between 2 and 10.

In another example, the prompt library includes: the example prompts; a description for each of the example prompts; and an embedding for each of the descriptions of the example prompts. In yet another example, the operations further include generate an original prompt for the query; provide the original prompt as input to the language model; receive, from the language model in response to the original prompt, an original response; generate an evaluation prompt including the query, the optimized response, and the original response, wherein the evaluation prompt includes instructions requesting the language model to determine which response that is more relevant to the query; and receive, from the language model in response to the evaluation prompt, an indication of the response that is more relevant to the query. In a further example a rationale for the indication of the response that is more relevant to the query is also received from the language model in response to the evaluation prompt. In yet a further example, the original response is indicated as the more relevant response, and the operations further comprise surfacing the original response concurrently with the optimized response. In still another example, the operations further include surfacing the optimized prompt concurrently with the optimized response. In a further example, the operations further comprise receiving feedback to at least one of the optimized prompt or the optimized response.

In another aspect, the technology relates to a computer-implemented method of rewriting a prompt. The method includes receiving a query at an application; extracting additional information for the query, wherein the additional information includes at least one of a description, a task, or a domain for the query; based on the additional information, identifying a top-k most similar example prompts from a prompt library; generating a revision prompt including the query and the top-k most example similar prompts; providing the revision prompt as input at a language model; receiving, from the language model in response to the revision prompt, an optimized prompt; providing the optimized prompt as input to the language model; receiving, from the language model in response to the optimized prompt, an optimized response; and surfacing the optimized response.

In an example, the identifying the top-k most similar example prompts further includes receiving an embedding for the additional information extracted for the query; and comparing the received embedding with embeddings for the example prompts in the prompt library. In another example, the method further includes receiving, from the language model in response to the original query, an original response; and generating an evaluation prompt including the original response and the optimized response, wherein the evaluation prompt includes static instructions directing the language model to evaluate the original response and the optimized response. In yet another example, the method further includes storing the optimized prompt as an example prompt in the prompt library.

In another aspect, the technology relates to a system for rewriting a prompt. The system includes at least one processor; and memory storing instructions that, when executed by the at least one processor, cause the system to perform operations. The operations include receive a query having a task and source data; extract the task from the query; generate an embedding for the task; identifying similar example prompts by comparing the embedding for the task to embeddings of example prompts in a prompt library; generate a revision prompt including the query and the similar example prompts; provide the revision prompt as input at a language model; receive, from the language model in response to the revision prompt, an optimized prompt; provide the optimized prompt as input to the language model; receive, from the language model in response to the optimized prompt, an optimized response; generate an original prompt for the query; provide the original prompt as input to the language model; receive, from the language model in response to the original prompt, an original response; generate an evaluation prompt including the query, the optimized response, and the original response, wherein the evaluation prompt includes instructions requesting the language model to determine which response that is more relevant to the query; receive, from the language model in response to the evaluation prompt, an indication of which response that is more relevant to the query; and surface the response that is indicated as being more relevant to the query.

In an example, a rationale for the indication of which response that is more relevant to the query is also received from the language model in response to the evaluation prompt. In another example, the operations further include surfacing the rationale.

In another aspect the technology relates to systems and methods for generating an optimized prompt using a language model ed. A query is received at an application. A description is generated for the query based on information extracted from the query. The description is then used to identify a top-k most similar prompt from a prompt library. An optimized prompt is generated at the language model based on the description and the top-k most similar prompts. An optimized response is generated based on the optimized prompt. An evaluation prompt including the optimized response is generated. The evaluation prompt includes instructions to compare the optimized response to a non-optimized response based on the query. A rationale is generated indicating the results of the comparison. The results of the comparison may be interactive.

It is to be understood that the methods, modules, and components depicted herein are merely examples. Alternatively, or in addition, the functionality described herein can be performed, at least in part, by one or more hardware logic components. For example, illustrative types of hardware logic components that can be used include Field-Programmable Gate Arrays (FPGAs), Application-Specific Integrated Circuits (ASICs), Application-Specific Standard Products (ASSPs), System-on-a-Chip systems (SOCs), Complex Programmable Logic Devices (CPLDs), etc. In an abstract, but still definite sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or inter-medial components. Likewise, any two components so associated can also be viewed as being "operably connected," or "coupled," to each other to achieve the desired functionality. Merely because a component, which may be an apparatus, a structure, a system, or any other implementation of a functionality, is described herein as being coupled to another component does not mean that the components are necessarily separate components. As an example, a component A described as being coupled to another component B may be a sub-component of the component B, the component B may be a sub-component of the component A, or components A and B may be a combined sub-component of another component C.

The functionality associated with some examples described in this disclosure can also include instructions stored in a non-transitory media. The term "non-transitory media" as used herein refers to any media storing data and/or instructions that cause a machine to operate in a specific manner. Illustrative non-transitory media include non-volatile media and/or volatile media. Non-volatile media include, for example, a hard disk, a solid-state drive, a magnetic disk or tape, an optical disk or tape, a flash memory, an EPROM, NVRAM, PRAM, or other such media, or networked versions of such media. Volatile media include, for example, dynamic memory such as DRAM, SRAM, a cache, or other such media. Non-transitory media is distinct from, but can be used in conjunction with transmission media. Transmission media is used for transferring data and/or instruction to or from a machine. Examples of transmission media include coaxial cables, fiber-optic cables, copper wires, and wireless media, such as radio waves.

Furthermore, those skilled in the art will recognize that boundaries between the functionality of the above-described operations are merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the disclosure provides specific examples, various modifications and changes can be made without departing from the scope of the disclosure as set forth in the claims below. Accordingly, the specification and figures are to be regarded in an illustrative rather than a restrictive sense, and all such modifications are intended to be included within the scope of the present disclosure. Any benefits, advantages, or solutions to problems that are described herein with regard to a specific example are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. A system (100) for rewriting a prompt for a language model (108), the system (100) comprising:
at least one processor (402); and
memory (404) storing instructions that, when executed by the at least one processor (402), cause the system (100) to perform operations comprising:
receive (302) a query at an application;
generate (304) a description for the query based on information extracted from the query;
identify (306) example prompts, from a prompt library (110), that are similar to the query, wherein the similar example prompts are based on the description for the query;
generate (308) a revision prompt including the query and the identified similar example prompts, wherein the revision prompt includes static instructions directing the language model (108) to revise the query based on the example prompts to form an optimized prompt;
provide (310) the revision prompt as input to the language model (108);
receive (312), from the language model (108) in response to the revision prompt, the optimized prompt;
provide (314) the optimized prompt as input to the language model (108);
receive (316), from the language model (108) in response to the optimized prompt, an optimized response; and
surface (318) the optimized response.

2. The system (100) of claim 1, wherein generating (304) the description comprises generating an extraction prompt including the query and providing the extraction prompt as input to the language model.

3. The system (100) of claim 1 or claim 2, wherein the operations further comprise extracting at least one of a domain or a task for the query.

4. The system (100) of claim 3, wherein identifying the similar example prompts is based on at least one of the description, domain, or task of the query.

5. The system (100) of any previous claim, wherein the operations further comprise:
generate an embedding for the description of the query.

6. The system (100) of claim 5, wherein the identifying (306) the similar prompts further comprises comparing the generated embedding to embeddings for the example prompts in the prompt library.

7. The system (100) of any previous claim, wherein the number of similar prompts is between 2 and 10.

8. The system (100) of any previous claim, wherein the prompt library (110) includes:
the example prompts;
a description for each of the example prompts; and
an embedding for each of the descriptions of the example prompts.

9. The system (100) of any previous claim, wherein the operations further comprise:
generate an original prompt for the query;
provide the original prompt as input to the language model (108);
receive, from the language model (108) in response to the original prompt, an original response;
generate an evaluation prompt including the query, the optimized response, and the original response, wherein the evaluation prompt includes instructions requesting the language model (108) to determine which response that is more relevant to the query; and
receive, from the language model (108) in response to the evaluation prompt, an indication of the response that is more relevant to the query.

10. The system (100) of claim 9, wherein a rationale for the indication of the response that is more relevant to the query is also received from the language model (108) in response to the evaluation prompt.

11. The system (100) of claim 9 or claim 10, wherein the original response is indicated as the more relevant response, and the operations further comprise surfacing the original response concurrently with the optimized response.

12. The system (100) of claim 10, wherein the operations further comprise surfacing the optimized prompt concurrently with the optimized response.

13. The system (100) of claim 12, wherein the operations further comprise receiving feedback to at least one of the optimized prompt or the optimized response.

14. A computer-implemented method (300) of rewriting a prompt, comprising:
receiving (302) a query at an application;
extracting (304) additional information for the query, wherein the additional information includes at least one of a description, a task, or a domain for the query;
based on the additional information, identifying (306) a top-k most similar example prompts from a prompt library (110);
generating (308) a revision prompt including the query and the top-k most example similar prompts;
providing (310) the revision prompt as input at a language model (108);
receiving (312), from the language model (108) in response to the revision prompt, an optimized prompt;
providing (314) the optimized prompt as input to the language model (108);
receiving (316), from the language model (108) in response to the optimized prompt, an optimized response; and
surfacing (318) the optimized response.

15. A system (100) for rewriting a prompt, comprising:
at least one processor (402); and
memory (404) storing instructions that, when executed by the at least one processor (402), cause the system (100) to perform operations comprising:
receive (302) a query having a task and source data (302);
extract the task from the query;
generate an embedding for the task;
identifying (306) similar example prompts by comparing the embedding for the task to embeddings of example prompts in a prompt library (110);
generate (308) a revision prompt including the query and the similar example prompts;
provide (310) the revision prompt as input at a language model (108);
receive (312), from the language model (108) in response to the revision prompt, an optimized prompt;
provide (314) the optimized prompt as input to the language model (108);
receive (316), from the language model (108) in response to the optimized prompt, an optimized response;
generate an original prompt for the query;
provide the original prompt as input to the language model;
receive, from the language model in response to the original prompt, an original response;
generate an evaluation prompt including the query, the optimized response, and the original response, wherein the evaluation prompt includes instructions requesting the language model to determine which response that is more relevant to the query;
receive, from the language model in response to the evaluation prompt, an indication of which response that is more relevant to the query; and
surface (318) the response that is indicated as being more relevant to the query.
